Europäisches Patentamt

European Patent Office

Office européen des brevets

(11) Numéro de publication: **0 296 633 B1**

(12) **FASCICULE DE BREVET EUROPEEN**

(45) Date de publication de fascicule du brevet: **02.12.92** (51) Int. Cl.⁵: **B62K 15/00**

(21) Numéro de dépôt: **88110189.3**

(22) Date de dépôt: **27.06.88**

(54) **Véhicule repliable.**

(30) Priorité: **25.06.87 GB 8714858**

(43) Date de publication de la demande:
**28.12.88 Bulletin 88/52**

(45) Mention de la délivrance du brevet:
**02.12.92 Bulletin 92/49**

(84) Etats contractants désignés:
**DE ES FR GB IT NL**

(56) Documents cités:
**BE-A- 470 322**
**US-A- 1 468 161**
**US-A- 3 419 283**
**US-A- 3 623 749**
**US-A- 4 844 494**

(73) Titulaire: **PROTOTYPES PIERRE BLANCHARD**
**P.P.B. LIMITEE**
**605, rue Isabelle**
**Acton Vale Ouébec J0H 1A0(CA)**

(72) Inventeur: **Blanchard, Pierre**
**136, rue Fournier, app. 11**
**Grandby J2J 1P4 (Ouébec)(CA)**

(74) Mandataire: **Bonnetat, Christian et al**
**CABINET BONNETAT 23, Rue de Léningrad**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

### DOMAINE DE L'INVENTION

La présente invention a trait à un véhicule, et plus particulièrement à un véhicule pour cyclistes, notamment un tricycle ou une bicyclette.

### ETAT DE LA TECHNIQUE

Les bicyclettes et tricycles à pédales doivent être aussi légers que possible afin d'être efficaces mais leurs cadres doivent être assez solides pour résister à des ventre-de-boeuf ou autres imperfections de la route sans déranger l'alignement des roues. Les bicyclettes et autres véhicules occupent beaucoup d'espace lorsqu'elles ne sont pas utilisées. Il est donc souhaitable de fournir un tricycle ou une bicyclette repliables puisque l'espace de rangement est de moins en moins disponible dans nos maisons.

Des tentatives antérieures pour exploiter des bicyclettes repliables sont décrites dans les brevets américains suivants : 3,419,283 du 31 décembre 1968 au nom de D.E. Newland ; 3,979,136 du 7 septembre 1976 au nom de Lassiere ; et 4,111,447 du 5 septembre 1978 au nom de Ishida. Ces bicyclettes repliables sont assez compliquées et dispendieuses de fabrication et ne sont pas suffisamment rigides lorsqu'en position opérante dressée. Aussi, elles occupent pas mal d'espace même lorsqu'en position repliée.

Par ailleurs, par le document BE-A-470 322, on connaît déjà un bicycle repliable comprenant un cadre allongé ayant une extrémité arrière et une extrémité avant, une roue arrière portée par l'extrémité arrière dudit cadre, une tige, une roue avant portée par une extrémité de ladite tige, une attache dans le plan général dudit cadre ayant une extrémité arrière articulée, de premiers et de seconds moyens de jonction pour relier ladite tige, les extrémités avant dudit cadre et de ladite attache respectivement, les deux moyens de jonction étant déplaçables le long de ladite tige et permettant la rotation de ladite tige relativement audit cadre dans le plan de ce dernier, la distance entre les premiers moyens de jonction et l'axe de pivot de l'attache étant plus courte que la distance entre les seconds moyens de jonction et l'axe de pivot de l'attache, de telle sorte que dans la position dressée dudit bicycle, lesdits deux moyens de jonction sont à une distance prédéterminée l'un de l'autre le long de ladite tige et celle-ci est maintenue généralement orthogonale audit cadre par l'agencement triangulaire de la tige, de l'attache et du cadre qui sont ainsi interreliés, le déplacement desdits moyens de jonction le long de ladite tige du côté opposé à ladite roue avant induisant lesdits moyens de jonction à se rapprocher le long de ladite tige jusqu'à une position le long dudit cadre de côté correspondant à la position repliée dudit bicycle.

### BUTS DE L'INVENTION

Le but principal de l'invention est de fournir un véhicule repliable, plus particulièrement une bicyclette ou un tricycle qui a un cadre très léger mais très solide et qui, lorsque replié, prend très peu d'espace de rangement.

Un autre but de l'invention est de fournir un véhicule repliable pour cycliste tel que ci-haut décrit, qui soit facilement et rapidement repliable ou remontable.

Un autre but de l'invention est de fournir un tel véhicule qui soit de construction simple et peu dispendieuse.

Encore un autre objet de l'invention est de fournir un support à bicyclette qui supporte la bicyclette en position debout aussi bien lorsque la bicyclette est dressée que lorsqu'elle est en position repliée.

### SOMMAIRE DE L'INVENTION

A cette fin, selon l'invention, le bicycle repliable du type décrit dans le document BE-A-470 322 est caractérisé en ce que ladite extrémité arrière de ladite attache est pivotée sur une portion intermédiaire du cadre au niveau d'un axe de pivot d'attache transversal audit cadre et en ce que le rapprochement desdits moyens de jonction s'accompagne d'une rotation concomittante de ladite tige.

Préférablement, on prévoit des moyens d'ancrage pour ancrer de façon amovible lesdits premiers moyens de jonction sur ladite tige lorsque ledit bicycle est en position dressée.

Avantageusement, il y aura des moyens de retenue pour maintenir lesdits seconds moyens de jonction à ladite distance prédéterminée desdits premiers moyens de jonction lorsque ledit bicycle est en position dressée. Dans ce dernier cas, il est souhaitable que lesdits premiers et seconds moyens de jonction comprennent un premier et un second collier, respectivement, chacun entourant partiellement ladite tige et délimitant un espacement entre ledit collier et ladite tige, lesdits moyens d'ancrage comprenant une section agrandie de la tige adjacente à ladite roue avant et contre laquelle lesdits premiers moyens de jonction s'accotent dans la position dressée dudit bicycle et un montant faisant saillie latéralement relativement à ladite tige et passant au-dessus dudit premier collier dans la position dressée dudit bicycle et lorsque ledit montant est dans une première position tournée, la rotation dudit montant d'un demi-tour à partir de ladite première position tournée amenant ledit montant vis-à-vis ledit espacement afin de permettre le déplacement dudit premier collier le long de ladite tige du côté opposé à ladite roue avant. Il est également souhaitable dans un tel cas que lesdits moyens de retenue comprennent des moyens de câble passant le long de ladite tige, reliés audit second collier à une section intermédiaire de ses extrémités et audit premier collier à une extrémité et à l'extrémité libre de ladite tige à son autre extrémité, lesdits moyens de câble étant tendus dans la position dressée dudit bicycle et retenant ledit second collier à une position le long de ladite tige qui soit intermédiaire à ses extrémités et à ladite distance prédéterminée dudit premier collier. De même, il est souhaitable que ledit montant soit fixé à ladite tige et que lesdits moyens de retenue comprennent une paire de montants latéraux faisant saillie latéralement de ladite tige et fixés à celle-ci et au-dessous et au-dessus respectivement dudit second collier lorsque ladite tige est dans une première position tournée, la rotation de ladite tige d'un demi-tour amenant ladite paire de montants vis-à-vis l'espacement dudit second collier afin de dégager le second collier pour son déplacement le long de ladite tige.

Profitablement, un tube entoure ladite tige et est fixé longitudinalement relativement à celle-ci, lesdits premiers et seconds moyens de jonction étant de premiers et de seconds colliers entourant partiellement ledit tube, un espacement étant défini entre chaque collier et ledit tube sur le côté de chaque cadre et de l'attache, lesdits moyens d'ancrage comprenant un élargissement de ladite tige adjacente à ladite roue avant et contre lequel ledit premier collier s'accote dans la position dressée dudit bicycle et un montant faisant saillie latéralement dudit tube et passant au-dessus dudit premier collier dans une première position tournée dudit tube, la rotation dudit tube d'un demi-tour amenant ledit montant vis-à-vis ledit espacement afin de permettre le déplacement dudit premier collier le long dudit tube dans une direction opposée à ladite roue avant. Dans ce dernier cas, il est désirable que lesdits moyens de retenue comprennent des moyens de câble reliés aux deux extrémités audit premier collier et à l'extrémité supérieure de ladite tige respectivement, et reliés par la section intermédiaire de ses extrémités audit second collier, ledit câble étant tenu en tension dans la position dressée dudit bicycle afin de maintenir ledit second collier à ladite distance prédéterminée dudit premier collier, la rotation dudit tube permettant le décrochage dudit premier collier et la tire dudit câble induisant le déplacement desdits premier et second colliers le long de ladite tige dans une direction opposée à ladite roue avant pour permettre le repliage dudit bicycle.

Préférablement, un poteau de siège est pivoté audit cadre adjacent audit axe de pivot d'attache pour un mouvement dans le plan dudit cadre et des moyens de support sont prévus pour barrer de façon amovible ledit poteau de siège en position dressée généralement orthogonale audit cadre. En ce cas, il est souhaitable que lesdits moyens de support comprennent une tige de support pivotée audit poteau de siège à une certaine distance de son joint de pivot audit cadre, ladite tige de support ayant une cavité à sa portion d'extrémité libre, une barre transversale fixée audit cadre à un niveau intermédiaire de ladite extrémité arrière de cadre et à ladite jonction de pivot de poteau de siège audit cadre, ladite cavité recevant de façon amovible ladite barre transversale pour barrer ladite tige de support à ladite barre transversale de sorte que ladite tige de support puisse maintenir ledit poteau de siège en position dressée. Il est également souhaitable que les moyens de ressort relient ledit cadre et ladite tige de support et contraignent ladite tige de support contre ledit poteau de siège dans la position repliée dudit bicycle et contraignent ladite tige de support contre ladite barre transversale dans la position dressée dudit bicycle.

Préférablement, ledit bicycle est une bicyclette, et ledit axe de pivot de l'attache définit un petit angle relativement à un axe transversal orthogonal audit cadre, et comprenant au surplus un guidon fixé à l'extrémité supérieure de ladite tige pour diriger ladite roue avant par rotation de ladite tige, ladite tige, lorsque ladite bicyclette est en position dressée, étant sensiblement coplanaire à ladite attache et audit cadre, et lorsque ladite bicyclette est en position repliée, étant transversalement déplacée par rapport au plan dudit cadre afin que ladite roue avant puisse chevaucher ladite roue arrière.

Profitablement, ladite attache comprend deux organes d'attache longitudinaux transversalement espacés qui sont interreliés, chacun pivoté à son extrémité arrière audit cadre par un agencement pivotant audit axe de pivot d'attache.

Avantageusement, la bicyclette comprend au surplus un support de bicyclette en forme de U ayant un élargissement destiné à passer au travers la roue arrière et à engager le sol et des pattes de côté qui sont debout dont les extrémités libres sont pivotées à l'extrémité arrière dudit cadre, des moyens d'ancrage pour retenir de façon sélective et amovible ledit support dans une première position inclinée vers l'arrière et vers le bas et une seconde position inclinée vers l'arrière et vers le haut laquelle dégage le sol, ledit support supportant également ledit cadre dans une position debout en collaboration avec ladite roue arrière lorsque ladite bicyclette est en position repliée et ledit support est dans ladite première position.

## COURTE DESCRIPTION DES FIGURES DES DESSINS

La figure 1 représente une élévation de côté de la première réalisation d'une bicyclette selon la présente invention montrée en position dressée et restant debout grâce à son support;

La figure 2 est une élévation de côté partielle agrandie de la portion intermédiaire du cadre montrant l'organe d'ancrage et le poteau du siège pivoté à celui-là;

La figure 3 est une vue éclatée des parties formant le joint de pivotement de l'organe d'ancrage au cadre;

La figure 4 est une élévation de l'extrémité de la douille biseautée de la figure 3;

La figure 5 est une élévation de côté de la bicyclette en position partiellement repliée et montrant aussi le support dans sa position dégagée du sol;

La figure 6 est une élévation de côté de la bicyclette complètement repliée tenant debout sur la base de contact à trois points définis par le support et la roue arrière;

La figure 7 est une vue partielle agrandie et en perspective montrant l'extrémité avant du cadre, le collier inférieur étant dans la position où la bicyclette est dressée et autour de la tige et en partie de la fourche supportant la roue avant;

La figure 8 est une vue en plan de dessus du cadre et de l'organe d'ancrage;

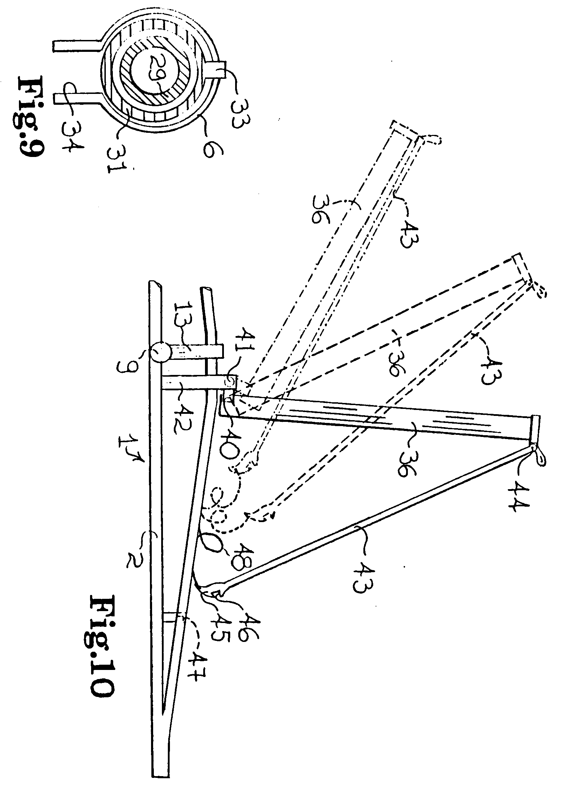

La figure 9 est une vue en coupe le long de la ligne 9-9 de la figure 7;

La figure 10 est une élévation de côté montrant la portion d'extrémité arrière du cadre de la bicyclette, le poteau du siège et sa tige de support et montrant, en traits pointillés, une position intermédiaire et une position complètement repliée du poteau du siège et de sa tige de support;

La figure 11 est une vue partielle en perspective du cadre de la bicyclette, du poteau du siège et de la tige de support, cette dernière étant en position dressée;

La figure 12 est une vue en perspective partielle du cadre de bicyclette, l'extrémité extérieure de la tige de support et des moyens de ressort reliant la tige de support au cadre de la bicyclette;

La figure 13 est une élévation partielle de côté montrant la roue arrière, le support de bicyclette et la portion arrière du cadre de la bicyclette;

Les figures 14 et 15 sont des vues partielles de dessus montrant le joint contraint par ressort des pattes du support de bicyclette avec le cadre de la bicyclette;

Les figures 16 et 17 montrent des parties des moyens de blocage pour le support de bicyclette; et

La figure 18 est une élévation de côté montrant une seconde réalisation de bicyclette en position dressée et tenue debout par le support de bicyclette.

## DESCRIPTION DETAILLEE DES REALISATIONS DE L'INVENTION

La bicyclette selon l'invention ici présente comprend un cadre allongé 1 de construction solide intégrale consistant en deux tiges longitudinales droites 2 espacées latéralement et renforcées par des tiges supérieures 3 de mise sous tension angulaire également espacées latéralement et chacune passant au-dessus d'une tige inférieure 2. Les tiges 2 et 3 peuvent être de construction tubulaire si désiré.

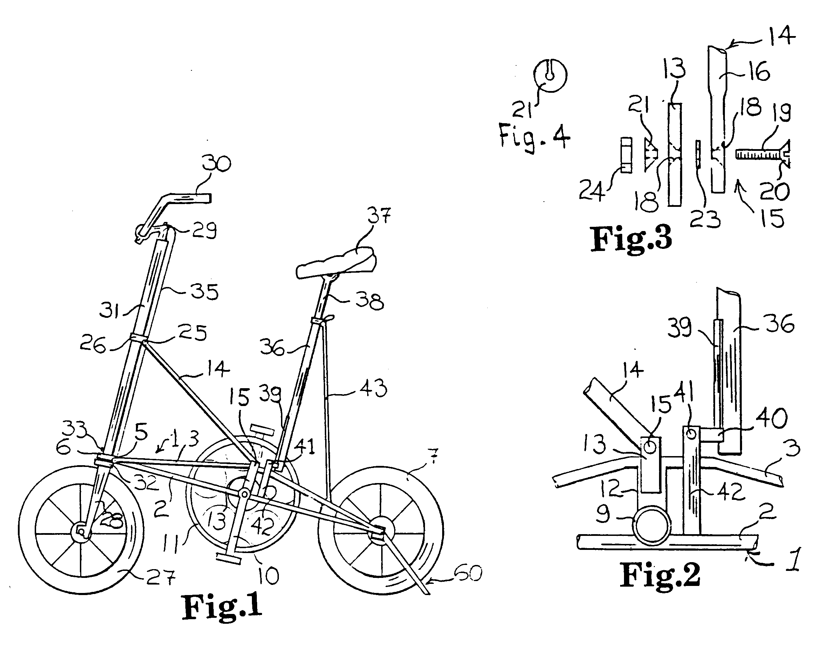

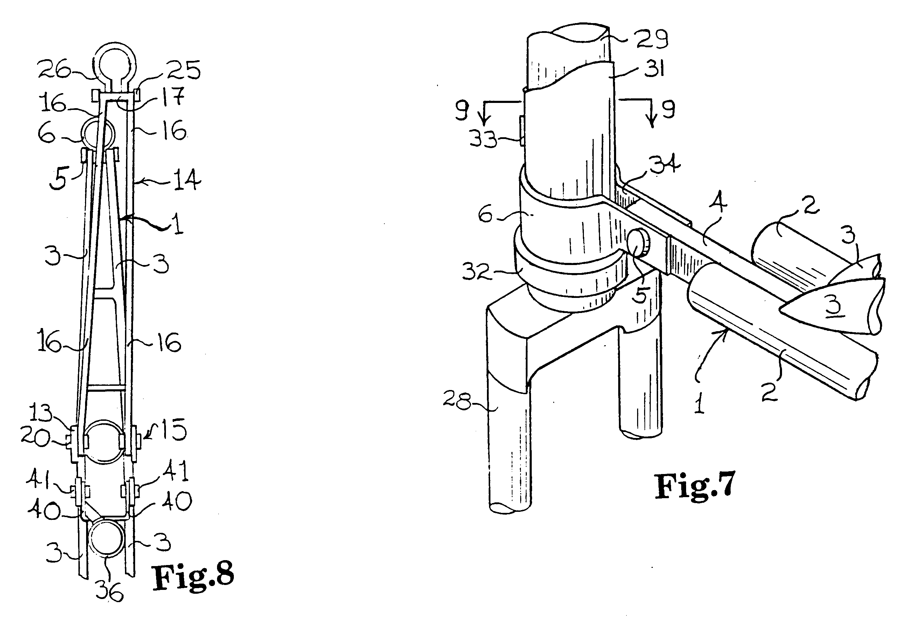

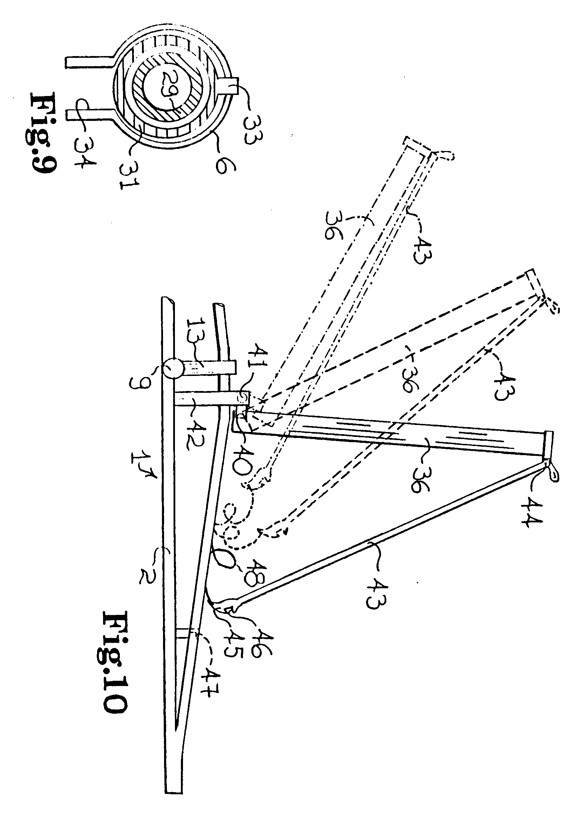

Tel que montré à la figure 7, les extrémités des tiges de mise sous tension 3 sont biseautées et sont soudées aux tiges inférieures 2 immédiatement en-deçà des extrémités de ces tiges 2. Les tiges 2 convergent également transversalement et leurs extrémités avant sont soudées ou autrement fixées à une barre plate 4 laquelle fait saillie vers l'avant et à laquelle un collier 6 est relié de façon pivotante au moyen d'une goupille transversale 5. L'extrémité arrière du cadre 1 supporte de façon tournante une roue arrière 7 de bicyclette le long de l'axe de pivot 8. Un tube 9 passe transversalement au niveau d'une section intermédiaire du cadre 1 entre les tiges inférieures 2 et les tiges supérieures de mise en tension 3, tel que montré à la figure 11. Ce tube reçoit de façon tournante et retient le mécanisme conventionnel de pédalier 10 montré à la figure 1 et auquel est fixé une roue dentée 11 à fort diamètre pour entraîner la roue arrière par un mécanisme connu de chaîne et de pignons et l'on prévoit aussi un système connu de dérailleur avant.

Un organe 12 est fixé sur le dessus du tube 9 passant par-dessus celui-ci entre les deux tiges 12 de mise en tension; une paire de barres 13 espacées transversalement et en position dressée sont fixées à une portion intermédiaire du cadre 1 et de façon plus précise sur chaque côté de l'organe 12, immédiatement au-dessus du tube 9, et passe au-dessus des tiges de mise en tension 3.

Un organe d'ancrage 14 (voir les figures 1 et 8) est relié de façon pivotante à son extrémité arrière aux barres 13 au moyen d'une connection pivotante d'ancrage 15. L'attache 14 consiste en deux organes longitudinaux 16 interreliés à leurs extrémités supérieures par un organe élargi 17.

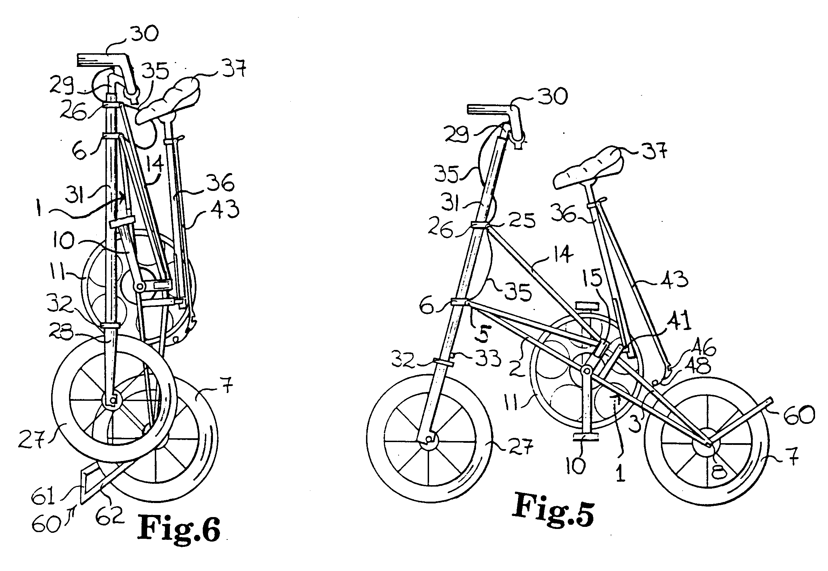

La connection pivotante d'ancrage 15 consiste en les éléments montrés à la figure 3 pour chaque organe 16. La barre 13 et l'extrémité arrière de l'organe 16 a des orifices biseautés 18 l'un recevant un boulon 19 ayant une tête biseautée 20, l'autre recevant la douille biseautée 21 qui est fendue radialement tel que montré à la figure 4 en 22. La connection est complétée par une rondelle intermédiaire 23 et un écrou 24 se vissant sur le boulon 19. En serrant le boulon, la douille fendue 21 est contrainte à mordre dans le pas de vis du boulon. La douille 21 et la rondelle 12 sont fabriquées à base de laiton afin de réduire la friction entre les parties 13 et 16 et entre la douille 21 et la partie 13. Un joint de pivot très ferme est alors obtenu et l'attache 14 ne peut pas pencher latéralement puisque chaque organe 16 est pivoté.

A l'extrémité avant de l'attache 14 est monté de façon pivotante un collier 26 semblable au collier 6, mais au niveau d'une goupille de pivot transversale 25.

La bicyclette a une roue avant 27 dont le diamètre est sensiblement le même que celui de la roue arrière qui est installée à l'intérieur d'une fourche conventionnelle 28, l'extrémité supérieure de laquelle est fixée à une tige 29 qui peut être de construction tubulaire, l'extrémité supérieure de laquelle supporte le guidon connu 30, le niveau duquel peut être ajusté si désiré de la façon usuelle. Un tube 31, préférablement fait de plastique, entoure complètement la tige 29 et s'accote à son extrémité inférieure contre un agrandissement 32 de la tige 29. La tige 29 peut tourner dans le tube 31 sous l'action du guidon 30 afin de diriger la roue avant 27. Les deux colliers 6 et 26 peuvent être déplacés ou "basculés", préférablement par coulissement, vers le haut ou vers le bas le long du tube 31 et par conséquent le long de la tige 29.

Dans la position dressée de la bicyclette, le collier 6 s'accote contre l'agrandissement 32 et est retenu dans cette position au moyen d'un montant 33 qui est fixé au tube 31 et fait saillie de celui-ci et passe au-dessus du collier inférieur 6 lorsque le tube est tourné de telle façon que le montant 33 passe à l'avant du bicycle. Le montant 33 de même que la section agrandie 32 forment des moyens d'ancrage pour le collier inférieur 6.

L'examen de la figure 7 révèle que le collier inférieur 6 définit un espacement 34 à l'arrière du tube 31, i.e. au niveau du contact de ses oreilles avec le cadre 1. Lorsque le tube 31 tourne d'un demi-tour, son montant 33 viendra vis-à-vis l'espacement 34, de façon à permettre le glissement vers le haut du collier inférieur 6 le long du tube 31.

Le collier supérieur 26 est tenu à une distance prédéterminée au-dessus du collier inférieur 6 dans la position dressée de la bicyclette au moyen d'un câble flexible 35 qui est relié par son extrémité inférieure au collier inférieur 6, à sa section intermédiaire au collier supérieur 26, et à son extrémité supérieure à une partie appropriée du guidon 30, tel que montré à la figure 1.

Dans la position dressée de la bicyclette, le câble 35 est maintenu tendu, le collier inférieur 6 étant dans sa position la plus basse et maintenu dans une telle position par le montant 33.

Dans la position dressée de la bicyclette, l'on comprendra que la section avant du cadre 1, l'attache 14 et la portion de tige 29 ou de tube 31 passant entre les deux colliers 6 et 26 forment un agencement triangulaire rigide retenant fermement le tube 31 et par conséquent la tige 29 dans sa position dressée à peu près orthogonale au cadre 1.

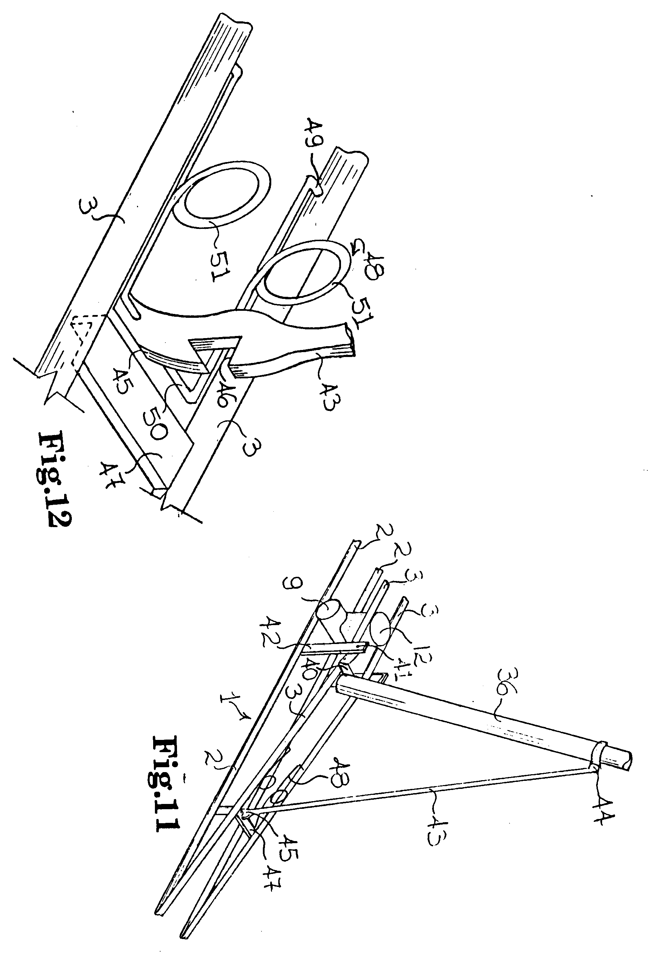

En se rapportant maintenant aux figures 1, 2, 8, 10 et 11, on constate que la bicyclette selon l'invention comprend un poteau de siège 36 préférablement de construction tubulaire afin de fixer de façon ajustable un siège 37 ainsi supporté au moyen du tube ou de la tige télescopique standard 38. L'extrémité inférieure du poteau de siège 36 est soudée ou autrement fixée à un joug 39 produisant un organe en forme de U, 40, les deux pattes de côté duquel sont pivotées en 41 à une paire de barres droites 42 espacées latéralement qui sont fixées à des tiges 2 et 3 du cadre 1, immédiatement à l'arrière du mécanisme de pédale et du joint pivotant de l'attache 14 au cadre. Le poteau de siège 36 peut ainsi pivoter dans le plan du cadre 1 à l'avant de la bicyclette. Le poteau de siège 36 est maintenu en position dressée passant au-dessus et généralement orthogonale au cadre allongé et sensiblement parallèle à la tige dressée 29 au moyen d'une tige de support 32 qui a une extrémité pivotée à l'extrémité supérieure de la base de siège 36 en 44 alors que son extrémité inférieure libre forme un agrandissement tel que montré à la figure 12 définissant une rampe courbée 45 qui est orientée vers l'arrière du véhicule et comprend une cavité 46 destinée à recevoir et à s'ancrer sur une barre de cadre transversale 47 de coupe angulaire et fixée de façon ferme au cadre 1, passant entre les deux tiges de mise en tension 3 et fixée à celles-ci. Un ressort 48 est destiné à contraindre l'extrémité extérieure de la tige de support 43 contre la barre transversale 47 avec la cavité 46 qui engage la barre empêchant le dégagement accidentel de la tige de support 43.

Le ressort 48 (figure 12) est de forme en U, les extrémités 49 de ses pattes qui sont tournées vers l'extérieur étant insérées de façon pivotante dans les tiges 3 de mise sous tension et sa section enfoncée 50 passant de façon tournante au travers l'extrémité extérieure de la tige de support 43. Chaque patte du ressort 48 forme un anneau 51 qui sert à contraindre la tige de support contre la barre 47. Lorsque la bicyclette est dressée, le poteau de siège 36 est pivoté vers l'arrière et le ressort 48 pivote au niveau de ses extrémités 49 afin de guider la rampe 45 contre la barre 47 jusqu'à ce que la cavité 46 reçoive la barre. Le ressort est alors contraint de maintenir la position barrée de la barre.

Lorsqu'on souhaite replier la bicyclette, l'on n'a qu'à frapper du pied la tige de support 43 afin de dégager la barre 47 de la cavité 46 puis de pivoter la base de siège 36 vers l'avant, le ressort 48 suscitant alors un mouvement de pivot automatique de la tige 43 de support de telle sorte qu'il restera éventuellement le long de la base de siège 36, tel que montré aux figures 5 et 6.

En regardant la figure 1, il est essentiel que la distance entre le collier inférieur 6 et le joint 15 de pivot de l'attache au cadre soit plus courte que la distance entre le collier supérieur 26 et ce même joint de pivot de l'attache 15.

Examinant maintenant la figure 8, l'on s'aperçoit que l'axe de pivot du joint 15 de pivot de l'attache est légèrement incliné transversalement au plan général contenu dans le cadre 1. Avec cet agencement, l'on comprendra que lorsque les deux colliers 6 et 26 sont rapprochés, il se créera un déplacement latéral appréciable du collier supérieur 26 par rapport au collier inférieur 6 même si les deux colliers sont à une distance prédéterminée l'un de l'autre lorsque la bicyclette est en position dressée, les deux colliers sont presque vis-à-vis le plan recevant le cadre 1 de la bicyclette. Il s'en suit que dans la position dressée de la bicyclette, la tige 29 demeure dans le plan général de la bicyclette et donc les deux roues ne sont pas basculées latéralement l'une par rapport à l'autre en prenant comme acquis que la roue avant est orientée vers l'avant. Malgré cela, lorsque la bicyclette est repliée, le pivotement latéral de la tige permet à la roue avant de chevaucher la roue arrière tel que bien montré à la figure 6.

Afin d'induire le mouvement de repliage, l'on n'a qu'à tourner le tube 31 de 180° de sorte que son montant 33 dégage le collier inférieur 6 tel qu'expliqué ci-haut et alors tirer sur le câble 35 qui lèvera le collier inférieur 6 et donc le collier supérieur 26 le long du tube 31. Ceci engendrera une rotation relative entre la tige et le cadre 1 dans le plan du cadre tel que clairement montré par la séquence montrée aux figures 5 et 6. Dans la position finale repliée de la bicyclette, la tige passe le long du cadre et sous celui-ci avec les deux colliers rejoignant alors l'extrémité supérieure du tube 31. Il est préférable de tourner le guidon 30 de 180° même si ça n'est pas indispensable. L'on remarquera que dans la position repliée, la roue avant chevauche la roue arrière puisqu'elle en est latéralement déportée. Au surplus, le poteau de support du siège est replié au-dessus du cadre 1 et vers son extrémité avant. Il est dans cette position de même que la tige de support 43 au moyen d'un ressort en spirale 48.

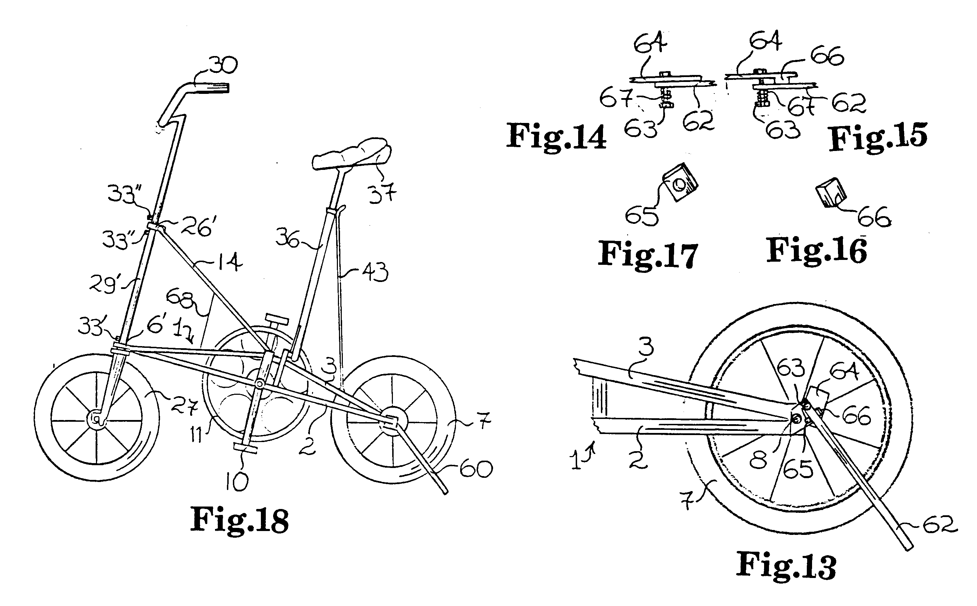

L'on prévoit un support de bicyclette 60, formé d'une barre en U définissant un élargissement 61 appuyé au sol et deux côtés 62 pivotés en 63 à une partie 64 qui est fixée à l'extrémité arrière du cadre de bicyclette 1 à l'arrière de l'axe de pivot 8 de la roue arrière 7. Un butoir carré 65 est soudé à la partie 64 immédiatement en avant des pattes de côté 62. Ce butoir peut être un simple écrou tel que montré à la figure 17. Une rampe 66 (voir la figure 16) est fixée sur l'autre côté de chaque patte 62 à la partie 64 de façon à retenir les pattes 62 de côté dans un angle tourné qui corresponde à la position du support pour soulever la roue arrière et maintenir la bicyclette soulevée debout sur le sol. Tel que montré aux figures 14 et 15, les joints pivotants 63 sont contraints par ressort tel que montré en 67. Dès lors, le support 60 peut être forcé à basculer vers l'arrière et vers le haut à la position inclinée vers l'arrière et vers le haut montrée à la figure 5 qui est la position "de course" de la bicyclette. L'on remarquera que le support sert aussi à maintenir la bicyclette complètement repliée debout sur le sol tel que montré à la figure 6, le support étant dans la position de la figure 13 mais le cadre étant tourné et passant à l'avant de la roue arrière. Le support et la roue arrière forment un contact à trois points avec le sol afin d'assurer la stabilité de la position repliée de la bicyclette qui prend alors un minimum d'espace de rangement.

La figure 18 montre une deuxième réalisation, semblable à la première réalisation, sauf pour ce qui est des modifications suivantes. Le tube de plastique n'est plus là et les colliers 6′ et 26′ sont de dimensions telles qu'ils peuvent coulisser directement sur la tige 29′. Cette dernière a un montant latéral inférieur 33′ pour ancrer le collier 6′ et une paire de montants latéraux 33″ pour ancrer le collier 26′ sous et audessus de ces derniers. Un câble flexible 68 relie l'attache 14 et le cadre 1.

La rotation du guidon 30 d'un demi-tour oblige les montants 33′ et 33″ à dégager les colliers 6′ et 26″ de sorte que les deux colliers 6′ et 26′ coulisseront vers le haut sur la tige 29′ entraînant le repliage de la bicyclette.

Dans les revendications annexées, le mot "bicycle" inclut tous les véhicules terrestres, entraînés en roulement par moteur ou par pédale, d'une dimension et d'un poids qui permettent une manipulation aisée, tels que des bicyclettes, des tricycles, des scooters, des motocyclettes, et semblables.

## Revendications

1. Bicycle repliable comprenant un cadre allongé (1) ayant une extrémité arrière et une extrémité avant, une roue arrière (7) portée par l'extrémité arrière dudit cadre, une tige (29), une roue avant (27) portée par une extrémité de ladite tige, une attache (14) dans le plan général dudit cadre ayant une extrémité arrière articulée, de premiers et de seconds moyens de jonction (6,26) pour relier ladite tige, les extrémités avant dudit cadre et de ladite attache respectivement, les deux moyens de jonction (6,26) étant déplaçables le long de ladite tige (29) et permettant la rotation de ladite tige relativement audit cadre dans le plan de ce dernier, la distance entre les premiers moyens de jonction et l'axe de pivot de l'attache étant plus courte que la distance entre les seconds moyens de jonction et l'axe de pivot de l'attache, de telle sorte que dans la position dressée dudit bicycle, lesdits deux moyens de jonction sont à une distance prédéterminée l'un de l'autre le long de ladite tige et celle-ci est maintenue généralement orthogonale audit cadre par l'agencement triangulaire de la tige, de l'attache et du cadre qui sont ainsi interreliés, le déplacement desdits moyens de jonction le long de ladite tige du côté opposé à ladite roue avant induisant lesdits moyens de jonction à se rapprocher le long de ladite tige jusqu'à une position le long dudit cadre de côté correspondant à la position repliée dudit bicycle, caractérisé en ce que ladite extrémité arrière de ladite attache (14) est pivotée sur une portion intermédiaire (13) du cadre au niveau d'un axe de pivot d'attache (15) transversal audit cadre et en ce que le rapprochement desdits moyens de jonction (6,26) s'accompagne d'une rotation concomitante de ladite tige (29).

2. Bicyle repliable tel que défini à la revendication 1, comprenant au surplus des moyens d'ancrage (32,33) pour ancrer de façon amovible lesdits premiers moyens de jonction (6) sur ladite tige (29) lorsque ledit bicycle est en position dressée.

3. Bicycle repliable tel que défini à la revendication 2, comprenant au surplus des moyens de retenue (35) pour maintenir lesdits seconds moyens de jonction (20) à ladite distance prédéterminée desdits premiers moyens de jonction (6) lorsque ledit bicycle est en position dressée.

4. Bicycle repliable tel que défini à la revendication 3, caractérisé en ce que lesdits premiers et seconds moyens de jonction comprennent un premier et un second collier (6,26), respectivement, chacun entourant partiellement ladite tige (29) et délimitant un espacement entre ledit collier et ladite tige, lesdits moyens d'ancrage comprenant une section agrandie (32) de la tige adjacente à ladite roue avant et contre laquelle lesdits premiers moyens de jonction (6) s'accotent dans la position dressée dudit bicycle et un montant (33) faisant saillie latéralement relativement à ladite tige et passant au-dessus dudit premier collier dans la position dressée dudit bicycle et lorsque ledit montant est dans une première position tournée, la rotation dudit montant d'un demi-tour à partir de ladite première position tournée amenant ledit montant vis-à-vis ledit espacement afin de permettre le déplacement dudit premier collier (6) le long de ladite tige (29) du côté opposé à ladite roue avant.

5. Bicycle repliable tel que défini à la revendication 4, caractérisé en ce que lesdits moyens de retenue comprennent des moyens de câble (35) passant le long de ladite tige (29), reliés audit second collier (26) a une section intermédiaire de ses extrémités et audit premier collier (6) à une extrémité et à l'extrémité libre de ladite tige (29) à son autre extrémité, lesdits moyens de câble (35) étant tendus dans la position dressée dudit bicycle et retenant ledit second collier à une position le long de ladite tige qui soit intermédiaire à ses extrémités et à ladite distance prédéterminée dudit premier collier.

6. Bicycle repliable tel que défini à la revendication 4, caractérisé en ce que ledit montant (33) est fixé à ladite tige (29) et lesdits moyens de retenue comprennent une paire de montants latéraux faisant saillie latéralement de ladite tige et fixés à celle-ci et au-dessous et au-dessus respectivement dudit second collier lorsque ladite tige est dans une première position tournée, la rotation de ladite tige d'un demi-tour amenant ladite paire de montants vis-à-vis l'espacement dudit second collier afin de dégager le second collier pour son déplacement le long de ladite tige.

7. Bicycle repliable tel que défini à la revendication 3, comprenant au surplus un tube (31) entourant ladite tige et fixé longitudinalement relativement à celle-ci, lesdits premiers et seconds moyens de jonction (6,26) étant de premiers et de seconds colliers entourant partiellement ledit tube, un espacement étant défini entre chaque collier et ledit tube sur le côté de chaque cadre et de l'attache, lesdits moyens d'ancrage comprenant un élargissement (32) de ladite tige adjacente à ladite roue avant et contre lequel ledit premier collier (6) s'accote dans la position dressée dudit bicycle et un montant (33) faisant saillie latéralement dudit tube et passant au-dessus dudit premier collier dans une première position tournée dudit tube, la rotation dudit tube d'un demi-tour amenant ledit montant (33) vis-à-vis ledit espacement (34) afin de permettre le déplacement dudit premier collier le long dudit tube dans une direction opposée à ladite roue avant.

8. Bicycle repliable tel que défini à la revendication 7, caractérisé en ce que lesdits moyens de retenue comprennent des moyens de câble (35) reliés aux deux extrémités audit premier collier (6) et à l'extrémité supérieure de ladite tige (14) respectivement, et reliés par la section intermédiaire de ses extrémités audit second collier (26), ledit câble étant tenu en tension dans la position dressée dudit bicycle afin de maintenir ledit second collier à ladite distance prédéterminée dudit premier collier, la rotation dudit tube permettant le décrochage dudit premier collier et la tire dudit câble induisant le déplacement desdits premier et second colliers le long de ladite tige dans une direction opposée à ladite roue avant pour permettre le repliage dudit bicycle.

9. Bicycle repliable tel que défini à la revendication 1, comprenant au surplus un poteau de siège (36) pivoté audit cadre adjacent audit axe de pivot d'attache pour un mouvement dans le plan dudit cadre et des moyens de support (43) pour barrer de façon amovible ledit poteau de siège en position dressée généralement orthogonale audit cadre.

10. Bicycle repliable tel que défini à la revendication 9, caractérisé en ce que lesdits moyens de support comprennent une tige de support (43) pivotée audit poteau de siège à une certaine distance de son joint de pivot (40) audit cadre, ladite tige de support (43) ayant une cavité (46) à sa portion d'extrémité libre, une barre transversale (47) fixée audit cadre à un niveau intermédiaire de ladite extrémité arrière de cadre et a ladite jonction de pivot de poteau de siège audit cadre, ladite cavité (46) recevant de façon amovible ladite barre transversale (47) pour barrer ladite tige de support à ladite barre transversale de sorte que ladite tige de support (43) puisse maintenir ledit poteau de siège en position dressée.

11. Bicycle repliable tel que défini à la revendication 10, comprenant au surplus des moyens de ressort (48) reliant ledit cadre et ladite tige de support et contraignant ladite tige de support (43) contre ledit poteau de siège (36) dans la position repliée dudit bicycle et contraignant ladite tige de support contre ladite barre transversale (47) dans la position dressée dudit bicycle.

12. Bicycle repliable tel que défini à la revendication 1, caractérisé en ce que ledit bicycle est une bicyclette, et en ce que ledit axe de pivot (15) de l'attache (14) définit un petit angle relativement à un axe transversal orthogonal audit cadre, et comprenant au surplus un guidon (30) fixé à l'extrémité supérieure de ladite tige pour diriger ladite roue avant par rotation de ladite tige, ladite tige, lorsque ladite bicyclette est en position dressée, étant sensiblement coplanaire à ladite attache et audit cadre, et lorsque ladite bicyclette est en position repliée, étant transversalement déplacée par rapport au plan dudit cadre afin que ladite roue avant puisse chevaucher ladite roue arrière.

13. Bicycle repliable tel que défini à la revendication 1, caractérisé en ce que ladite attache (14) comprend deux organes d'attache longitudinaux (16) transversalement espacés qui sont interreliés, chacun pivoté à son extrémité arrière dudit cadre par un agencement pivotant (15) audit axe de pivot d'attache.

14. Bicycle repliable tel que défini à la revendication 1, étant une bicyclette et comprenant au surplus un support de bicyclette (60) en forme de U ayant un élargissement destiné à passer au travers la roue arrière et à engager le sol et des pattes de côte (62) qui sont debout dont les extrémités libres (63) sont pivotées à l'extrémité arrière dudit cadre, des moyens d'ancrage (65,66) pour retenir de façon sélective et amovible ledit support dans une première position inclinée vers l'arrière et vers le bas et une seconde position inclinée vers l'arrière et vers le haut laquelle dégage le sol, ledit support (60) supportant également ledit cadre dans une position debout en collaboration avec ladite roue arrière lorsque ladite bicyclette est en position repliée et ledit support est dans ladite première position.

**Claims**

1. A collapsible cycle comprising an elongated frame (1) having a rear end and a front end, a rear wheel (7) carried by the rear end of said frame, a stem (29), a front wheel (27) carried by one end of said stem, a brace (14) in the general plane of said frame having a rear pivoted end, first and second connector means (6, 26) for interconnecting said stem, the front ends of said frame and said brace respectively, both connector means (6, 26) shiftable along said stem (29) and allowing rotation of said stem relative to said frame in the plane of the latter, the distance between the first connector means and the brace pivotal axis being shorter than the distance between the second connector means and the brace pivotal axis, whereby in the erected position of said cycle said two connector means are at a predetermined distance apart along said stem and the latter is maintained generally normal to said frame by the triangular arrangement of the mutually interconnected stem, brace and frame, shifting of said connector means along said stem in a direction away from said front wheel causing said connector means to take a closer distance apart along said stem to a position along said side frame corresponding to the collapsed position of said cycle, wherein said rear end of said brace (14) is pivoted to an intermediate portion (13) of the frame about a brace pivotal axis (15) transverse to said frame and wherein the movement toward one another of said connectoir means (6, 26) being accompanied by a concurrent rotation of said stem (29).

2. A collapsible cycle as defined in claim 1, further including latch means (32, 33) to releasably latch said first connector means (6) on said stem (29) when said cycle is in erected position.

3. A collapsible cycle as defined in claim 2, further including holding means (35) to hold said second connector means (20) at said predetermined distance from said first connector means (6) when said cycle is in erected position.

4. A collapsible cycle as defined in claim 3, wherein said first and second connector means include a first and a second collar (6, 26) respectively, each partly surrounding said stem (29) and enclosing a space between said collar and said stem, said latch means including a stem enlargement (32) adjacent said front wheel and against which said first connector means (6) abut in the erected position of said cycle and a stud (33) laterally protruding relative to said stem and overlying said first collar in the erected position of said cycle and when said stud is in a first rotated position, rotation of said stud through half a turn from said first rotated position bringing said stud in register with said space to allow shifting of said first collar (6) along said stem (29) away from said front wheel.

5. A collapsible cycle as defined in claim 4, wherein said holding means include a cable means (35) extending along said stem (29), attached to said second collar (26) intermediate its ends and to said first collar (6) at one end and to the free end of said stem (29) at its other end, said cable means (35) being taut in the erected position of said cycle and holding said second collar at a position along said stem intermediate the ends thereof and at said predetermined distance from said first collar.

6. A collapsible cycle as defined in claim 4, wherein said stud (33) is secured to said stem (29) and said holding means include a pair of lateral studs laterally protruding from and secured to said stem and underlying and overlying said second collar respectively when said stem is in a first rotated position, rotation of said stem through half a turn bringing said pair of studs in register with the space of said second collar to release the second collar for shifting of same along said stem.

7. A collapsible cycle as defined in claim 3, further including a tube (31) surrounding and longitudinally fixed relative to said stem, said first and second connector means (6, 26) being first and second collars partly surrounding said tube, there being a space between each collar and said tube on the side of said frame and brace, said latch means including an enlargement (32) of said stem adjacent said front wheel and against which said first collar (6) abuts in the erected position of the said cycle and a stud (33) laterally protruding from said tube and overlying said first collar in a first rotated position of said tube, rotation of said tube through half a turn bringing said stud (33) in register with said space (34) to permit shifting of said first collar along said tube in a direction away from said front wheel.

8. A collapsible cycle as claimed in claim 7, wherein said holding means include a cable means (35) attached at both ends to said first collar (6) and to the upper end of said stem (14) respectively, and attached intermediate its ends to said second collar (26), said cable held tight in the erected position of said cycle to thus hold said second collar at said predetermined distance from said first collar, rotation of said tube to allow unlatching of said first collar and pulling on said cable causing shifting of said first and second collars along said stem in a direction away from said front wheel to permit collapsing of said cycle.

9. A cycle as defined in claim 1,
further including a saddle post (36) pivoted to said frame adjacent said brace pivot axis for movement in the plane of said frame and stay means (43) to releasably lock said saddle post in erected position generally normal to said frame.

10. A collapsible cycle as defined in claim 9,
wherein said stay means include a stay rod (43) pivoted to said saddle post at a distance from its pivotal connection (40 to said frame, said stay rod (43) having a notch (46) at its free end portion, a transverse bar (47) secured to said frame intermediate said frame rear end and said saddle post pivotal connection to said frame, said notch (46) releasably receiving said transverse bar (47) to lock said stay rod to said transverse bar whereby said stay rod (43) maintains said saddle post in erected position.

11. A collapsible cycle as defined in claim 10,
further including spring means (48) joining said frame and said stay rod (43) and urging said stay rod against said saddle post (36) in the collapsed position of said cycle and urging said stay rod against said transverse bar (47) in the erected position of said cycle.

12. A collapsible cycle as defined in claim 1,
wherein said cycle is a bicycle, and wherein said brace pivotal axis (15) makes a small angle relative to a transverse axis normal to said frame, and further including a handle bar (30) fixed to the upper end of said stem to steer said front wheel by rotation of said stem, said stem, when said bicycle is in erected position, being substantially co-planar with said brace and said frame, and when said bicycle is in collapsed position, being transversely tilted relative to the plane of said frame so that the front wheel overlaps said rear wheel.

13. A collapsible cycle as defined in claim 1,
wherein said brace (14) comprises two interconnected, transversely spaced longitudinal brace members (16), each pivoted at its rear end to said frame by a pivotal assembly (15) at said brace pivotal axis.

14. A collapsible cycle as defined in claim 1,
and being a bicycle, and further including a U-shaped bicycle stand (60) having a bight adapted to extend across the rear wheel and to engage the ground and upstanding side legs (62) having their free ends (63) pivotally mounted to the rear end of said frame, latch means (65, 66) to releasably selectively maintain said stand in a rearwardly downwardly inclined first position and a ground clearing rearwardly upwardly inclined second position, said stand (60) also holding said frame in an upright position in collaboration with said rear wheel when said cycle is in collapsed position and said stand in said first position.

**Patentansprüche**

1. Klappbares Zweirad mit einem länglichen Rahmen (1), der ein hinteres und ein vorderes Ende aufweist, mit einem Hinterrad (7), das durch das hintere Ende des Rahmens gehalten wird, mit einer Stange (29), einem Vorderrad (27), das durch ein Ende der Stange gehalten wird, mit einem Verbindungsstück (14) in der Rahmenebene, das ein drehbares hinteres Ende hat, mit ersten und zweiten Verbindungsmitteln (6,26) zur Verbindung der Stange mit den Vorderenden des Rahmens bzw. des Verbindungsstückes, wobei die zwei Verbindungsmittel (6,26) entlang der Stange (29) verschiebbar sind und die Drehung der Stange in Bezug zum Rahmen in der Rahmenebene erlauben, wobei der Abstand zwischen den ersten Verbindungsmitteln und der Drehachse des Verbindungsstückes kürzer ist als der Abstand zwischen den zweiten Verbindungsmitteln und der Drehachse des Verbindungsstückes, so daß die beiden Verbindungsmittel in der ausgeklappten Stellung des Zweirads sich in einem vorbestimmten Abstand voneinander entlang der Stange befinden und diese ungefähr rechtwinklig zum Rahmen durch die dreieckige Anordnung der Stange, des Verbindungsstücks und des Rahmens, die so untereinander verbunden sind, gehalten wird, wobei die Verschiebung der Verbindungsmittel entlang der Stange zu der dem Vorderrad gegenüberliegenden Seite die Verbindungsmittel dazu bringt, sich entlang der Stange bis in eine Position seitlich des Rahmens anzunähern, die der zusammengeklappten Stellung des Zweirads entspricht, dadurch gekennzeichnet, daß das vordere Ende des Verbindungsstücks (14) um ein Mittelteil (13) des Rahmens auf der Höhe einer quer zum Rahmen stehenden Drehachse des Verbindungsstücks (15) drehbar ist und dadurch, daß die Annäherung der Verbindungsmittel (6,26) mit einer gleichzeitigen Drehung der Stange (29) verbunden ist.

2. Klappbares Zweirad nach Anspruch 1, das darüberhinaus Verankerungsmittel (32,33) zur Verankerung der ersten Verbindungsmittel (6) mit der Stange (29) in unbeweglicher Weise umfaßt, wenn das Zweirad in der ausgeklappten Stellung ist.

3. Klappbares Zweirad nach Anspruch 2, das darüberhinaus Halterungsmittel (35) zum Halten der zweiten Verbindungsmittel (20) in einem vorbestimmten Abstand zu den ersten Verbindungsmittel (6) umfaßt, wenn das Zweirad in der ausgeklappten Stellung ist.

4. Klappbares Zweirad nach Anspruch 3, dadurch gekennzeichnet, daß die ersten und zweiten Verbindungsmittel eine erste bzw. eine zweite Schelle (6,26) umfassen, von denen jede die Stange (29) teilweise umschließt und einen Freiraum zwischen der Schelle und der Stange begrenzt, wobei die Verankerungsmittel einen zum Vorderrad hinliegenden vergrößerten Abschnitt (32) der Stange umfassen, gegen den sich die ersten Verbindungsmittel (6) in der ausgeklappten Stellung des Zweirads anlegen, und wobei ein Vorsprung (33) seitlich von der Stange absteht und die erste Schelle nach oben in der ausgeklappten Stellung des Zweirads durchlaufen hat und, wenn der Vorsprung in einer ersten Drehstellung steht, die Drehung des Vorsprungs um eine halbe Umdrehung ausgehend von der ersten Drehstellung den Vorsprung auf Höhe des Freiraums bringt, um so eine Verschiebung der ersten Schelle (6) entlang der Stange (29) zu der dem Vorderrad gegenüberliegenden Seite zu erlauben.

5. Klappbares Zweirad nach Anspruch 4 dadurch gekennzeichnet, daß die Haltemittel Seilzugmittel (35) umfassen, die entlang der Stange (29) verlaufen und mit der zweiten Schelle (26) an einem Mittelabschnitt zwischen seinen Enden, mit der Schelle (6) an einem Ende und mit seinem anderen Ende am freien Ende der Stange (29) verbunden ist, wobei die Seilzugmittel (35) in der ausgeklappten Stellung des Zweirads gespannt sind und die zweite Schelle an einer Stelle entlang der Stange hält, die zwischen ihren Enden liegt und einen vorbestimmten Abstand zur ersten Schelle aufweist.

6. Klappbares Zweirad nach Anspruch 4 dadurch gekennzeichnet, daß der Vorsprung (33) an der Stange (29) befestigt ist und die Haltemittel ein Paar seitliche Vorsprünge umfassen, die seitlich aus der Stange hervorstehen und an dieser sowohl unterhalb als auch oberhalb der zweiten Schelle befestigt sind, wenn die Stange in ihrer ersten Drehstellung ist, wobei die Drehung der Stange um eine halbe Umdrehung die beiden Vorsprünge auf Höhe des Freiraums der zweiten Schelle bringt, um so die zweite Schelle für ihre Verschiebung entlang der Stange zu lösen.

7. Klappbares Zweirad nach Anspruch 3, das darüberhinaus ein Rohr (31) umfaßt, das die Stange umschließt und in Längsrichtung in Bezug auf diese fixiert ist, wobei die ersten und zweiten Verbindungsmittel (6,26) erste und zweite Schellen sind, die das Rohr teilweise umschließen, wobei ein Freiraum zwischen jeder Schelle und dem Rohr auf der Seite von jedem Rahmenteil und von der Verbindungsstütze vorhanden ist, wobei die Verankerungsmittel eine zum Vorderrad hinweisende Verdickung (32) der Stange umfaßt, gegen die sich die erste Schelle (6) in der ausgeklappten Stellung des Zweirad anlegt, und wobei ein Vorsprung (33) seitlich aus dem Rohr absteht und in einer ersten Drehstellung des Rohres die erste Schelle nach oben durchlaufen hat, wobei die Drehung des Rohres um eine halbe Umdrehung die Stütze (33) gegenüber zum Freiraum (34) bringt, um die Verschiebung der ersten Schelle entlang des Rohres in eine Richtung von dem Vorderrad weg zu erlauben.

8. Klappbares Zweirad nach Anspruch 7 dadurch gekennzeichnet, daß die Haltemittel Seilzugmittel (35) umfassen, die an zwei Enden der ersten Schelle (6) bzw. an dem oberen Ende der Stange (14) befestigt sind und die an einem Abschnitt zwischen ihren Enden mit der zweiten Schelle (26) verbunden sind, wobei der Seilzug in der ausgeklappten Stellung des Zweirads unter Spannung gehalten wird, um die zweite Schelle im vorbestimmten Abstand zur ersten Schelle zu halten, wobei die Drehung des Rohres die Verschiebung der ersten Schelle erlaubt und der Zug des Seilzugs die Verschiebung der ersten und zweiten Schelle entlang der Stange in eine Richtung vom Vorderrad weg verursacht, um das Zusammenklappen des Zweirades zu ermöglichen.

9. Klappbares Zweirad nach Anspruch 1, das darüberhinaus eine am anschließenden Rahmen um die Drehachse der Verbindungsstütze drehbare Sattelstütze (36) für eine Bewegung in der Ebene des Rahmens und Stützmittel (43) umfaßt, um die Sattelstütze unbeweglich in der ausgeklappten Stellung im wesentlichen rechtwinklig zum Rahmen zu verriegeln.

10. Klappbares Zweirad nach Anspruch 9 dadurch gekennzeichnet, daß die Stützmittel eine Stützstange (43) umfassen, die gegenüber der Sattelstütze in einem bestimmten Abstand von ihrer Drehverbindung (40) mit dem Rahmen verdreht ist, wobei die Stützstange (43) eine Aussparung (46) an ihrem unteren freien Endteil aufweist, ein Quersteg (47) am Rahmen auf einer Höhe zwischen dem hinteren Rahmenende und der Drehverbindung der Sattelstütze am Rahmen befestigt ist und wobei die Aussparung (46) den Quersteg (47) in unbeweglicherweise aufnimmt, um die Stützstange so mit dem Quersteg zu verriegeln, daß die Stützstange (43) die Sattelstütze in ihrer ausgeklappten Position hält.

11. Klappbares Zweirad nach Anspruch 10, die darüberhinaus Federmittel (48) umfaßt, die den Rahmen und die Stützstange verbinden und die Stützstange (43) in der zusammengeklappten Stellung des Zweirads gegen die Sattelstütze (36) und in der ausgeklappten Stellung des Zweirads die Stützstange gegen den Quersteg (47) zwängen.

12. Klappbares Zweirad nach Anspruch 1 dadurch gekennzeichnet, daß das Zweirad ein Fahrrad ist und dadurch, daß die Drehachse (15) der Verbindungsstütze (14) einen kleinen Winkel in Bezug auf eine rechtwinklig zum Rahmen stehende Querachse einnimmt, und das Zweirad außerdem einen Lenker (30) umfaßt, der am oberen Ende der Stange befestigt ist, um das Vorderrad durch Drehung der Stange zu steuern, wobei die Stange, wenn das Fahrrad ist ausgeklappter Stellung ist, ungefähr in einer Ebene mit der Verbindungsstütze und dem Rahmen liegt und, wenn das Fahrrad zusammengeklappt ist, im Bezug auf die Ebene des Rahmens quer verschoben ist, damit sich das Vorderrad mit dem Hinterrad überlappen kann.

13. Klappbares Zweirad nach Anspruch 1 dadurch gekennzeichnet, daß die Verbindungsstütze (14) zwei längliche, quer voneinander beabstandete Verbindungsteile (16) umfaßt, die miteinander verbunden sind und von denen jedes an seinem hinteren Ende am Rahmen durch eine Drehvorrichtung (15) um die Drehachse der Verbindungsstütze schwenkbar ist.

14. Klappbares Zweirad nach Anspruch 1, daß es ein Fahrrad ist und außerdem einen U-förmigen Fahrradständer (16) umfaßt, der eine Ausdehnung aufweist, um das Hinterrad aufzunehmen und den Boden zu berühren und der sowohl Seitenschenkel (62), die gerade sind und deren freien Ende (63) am Hinterende des Rahmens drehbar sind, als auch Verankerungsmittel (65,66) umfaßt, um den Ständer wahlweise und unbeweglich in einer ersten, nach hinten und nach unten geneigten Stellung und in einer zweiten, nach vorne und nach oben geneigten Stellung, in der er vom Boden gelöst ist, zu halten, wobei der Ständer (60) den Rahmen zusammen mit dem Hinterrad gerade hält, wenn das Fahrrad in seiner zusammengeklappten Stellung und der Ständer in seiner ersten Position ist.

Fig.1

Fig.2

Fig.3

Fig.4

Fig.6

Fig.5

Fig.8

Fig.7

Fig.9

Fig.10

Fig.12

Fig.11

EP 0 296 633 B1

**Fig.9**

**Fig.10**

18

Fig.18

Fig.14

Fig.17

Fig.13

Fig.16

Fig.15